# EUROPÄISCHE PATENTSCHRIFT

(11) **EP 1 819 939 B1**
(45) Veröffentlichungstag und Bekanntmachung des Hinweises auf die Patenterteilung: **26.08.2009**
(21) Anmeldenummer: 05824197.7
(22) Anmeldetag: 01.12.2005
(51) Int. Cl.: F16G 5/18

(54) **LASCHENKETTE FÜR INSBESONDERE EINEN FAHRZEUGANTRIEB**
FLAT LINK ARTICULATED CHAIN PARTICULARLY FOR A VEHICLE DRIVE
CHAINE ARTICULEE DESTINEE NOTAMMENT A UNE TRANSMISSION DE VEHICULE

(30) Priorität: 02.12.2004 DE 102004058308; 23.09.2005 DE 102005045631; 17.11.2005 DE 102005054714
(43) Veröffentlichungstag der Anmeldung: 22.08.2007
(73) Patentinhaber: LuK Lamellen und Kupplungsbau Beteiligungs KG, 77815 Bühl (DE)
(72) Erfinder: SIMONOV, Anton, 77815 Bühl (DE); VORNEHM, Martin, 77815 Bühl (DE); TRILLER, Andreas, 77815 Bühl (DE); JUNIG, Marcus, 77815 Bühl (DE); ISPOLATOVA, Olga, 77815 Bühl (DE)
(86) Internationale Anmeldenummer: PCT/DE2005/002163
(87) Internationale Veröffentlichungsnummer: WO 2006/058528

(56) Entgegenhaltungen:
- US-A- 4 507 106
- US-A- 5 236 399
- US-B1- 6 277 046

## Beschreibung

Die vorliegende Erfindung betrifft eine Laschenkette für insbesondere ein Fahrzeuggetriebe, einen Fahrzeugtriebstrang oder einen Fahrzeugmotor-Nebentrieb, gemäß dem Oberbegriff von Anspruch 1. Eine derartige Laschenkette ist aus der US 4,507,106 A bekannt.

Für Laschenketten der hier angesprochenen Art gibt es je nach Anwendung im Fahrzeugantrieb verschiedene Ausgestaltungen. Bei Anwendung in einem stufenlosen Kegelscheiben-Kettenvariator (CVT) als Teil des Fahrzeuggetriebes weisen die Druckstücke speziell geformte Stirnflächen auf, über welche die Zugkraft zwischen Kegelscheiben und Kette als Reibkraft übertragen wird. Bei den meisten anderen Anwendungen im Fahrzeugantrieb ist die Laschenkette eine Zahnkette, d.h. die Kettenlaschen weisen an mindestens einer Seite Zähne auf, über welche die Zugkraft zwischen Zahnrädern und der Kette übertragen wird. Derartige Zahnketten sind im Stand der Technik, beispielsweise durch die US-PS 4,906,224, bekannt geworden. Solche Zahnketten werden an mehreren Stellen im Fahrzeugantrieb eingesetzt, z.B. bei Allrad-Verteilergetrieben, bei Front-Quer-Getrieben zum Überbrücken des Achsabstand zum Differential, als Antriebsketten eines getriebeinternen hydraulischen Hilfsaggregats, als Ventiltrieb-Steuerkette eines Verbrennungsmotors oder auch als Antriebsketten anderer Hilfsaggregate des Fahrzeugs (Kühlmittelpumpe, Schmiermittelpumpe, Klimakompressor, Lichtmaschine, Startermotor, Hybrider Zusatzmotor, Bremskraftverstärker und dergleichen).

Eine Laschenkette der hier angesprochenen Art setzt sich aus einer Vielzahl von Kettenlaschen zusammen, die über Druckstücke gelenkig miteinander verbunden sind. Die Kettenlaschen können dabei in der Form von Laschenpaketen angeordnet sein, die dadurch entstehen, dass mehrere Kettenlaschen aneinander angrenzend und nebeneinander liegend von den Druckstücken durchsetzt werden, sodass sich eine Laschenkette ergibt, die auf Zug belastet große Kräfte übertragen kann.

Die Kraftübertragung zwischen den Druckstücken und den Kettenlaschen findet dabei an Anlageflächen statt, die sowohl an den Druckstücken als auch an den Kettenlaschen ausgebildet sind und entlang derer die Druckstücke und die Kettenlaschen aneinander anliegen. Die Druckstücke werden auch als Stifte oder Pins bezeichnet, die jeweils paarweise als Wiegegelenke in zwei Laschenöffnungen eingesetzt sind, die bei Ketten für Kegelscheibenumschlingungsgetriebe oftmals zu einer großen Öffnung zusammengewachsen sind.

An den Druckstücken sind unterschiedliche Funktionsflächen ausgebildet. Das in einer Öffnung der Laschenkette einander gegenüberliegende Druckstückpaar liegt am Wälzbereich oder der Wälzfläche aneinander an. Beim Knicken der Kette erfolgt an dieser Stelle eine Abwälzbewegung um den aufgrund der Geometrie der Druckstücke vorgegebenen Knickwinkel.

An den Anlageflächen der Druckstücke liegen diese an Anlageflächen der Kettenlasche an, sodass hier Flächenpressungen zwischen den Anlageflächen der Kettenlaschen und den Anlageflächen der Druckstücke entstehen. Diese Anlageflächen müssen mehrere Anforderungen erfüllen. Einerseits sollen die entstehenden Flächenpressungen aufgrund der Formgebung der Anlageflächen nicht zu groß werden und andererseits sollen die Anlageflächen auch als Verdrehsicherung dienen derart, dass sich die Druckstücke in den Öffnungen der Kettenlaschen nicht drehen.

Zu diesem Zweck sind bereits Laschenketten bekannt geworden, die segmentierte Anlageflächen mit zwei deutlich unterschiedlichen Radien pro Segment aufweisen. So zeigt die US 6277046 eine Laschenkette mit zwei Anlageflächen am Druckstück mit zwei unterschiedlichen Radien. Durch diese unterschiedlichen Radien wird nun eine Verdrehsicherung erzielt, sodass sich die Druckstücke in der Öffnung der Kettenlaschen nicht drehen. Eine weitere bekannte Laschenkette ist in der US 5236399 beschrieben, die eine Verdrehsicherung dadurch implementiert, dass jeweils wieder zwei unterschiedliche Radien an den Anlageflächen vorgesehen sind oder die Radienmittelpunkte versetzt sind.

Neben dieser Verdrehsicherung müssen die Anlageflächen auch der Anforderung einer reißfesten und dauerfesten Laschenkette gerecht werden. Zu diesem Zweck dürfen die Flächenpressungen in der Kontaktzone zwischen den Druckstücken und den Kettenlaschen vorgegebene Werte nicht überschreiten. Nach bisherigem Verständnis waren hier Anlageflächen mit geringer Krümmung und damit großem Krümmungsradius erforderlich. Nach den vorstehend beschriebenen bekannten Laschenketten ist daher eine Vergrößerung des Krümmungsradius erforderlich, um zu einer Verringerung der Kontaktpressung in den Anlageflächen zu gelangen.

Es hat sich nun überraschend gezeigt, dass für das Auftreten von Druckspannungsspitzen im Kontaktbereich der Anlageflächen der Druckstücke und der Laschenkette nicht das Vorhandensein eines kleinen Krümmungsradius (und damit einer großen Krümmung) verantwortlich ist, sondern lokale Spannungsspitzen verstärkt im Übergangsbereich zwischen unterschiedlichen Krümmungsradien auftreten. Es führt dies nun zu der Erkenntnis, dass bei den bekannten Laschenketten deutliche Spannungsspitzen im Übergangsbereich von einem Krümmungsradius auf den anderen Krümmungsradius vorliegen und zwar auch dann, wenn dieser Übergang tangential, also ohne Knick verläuft.

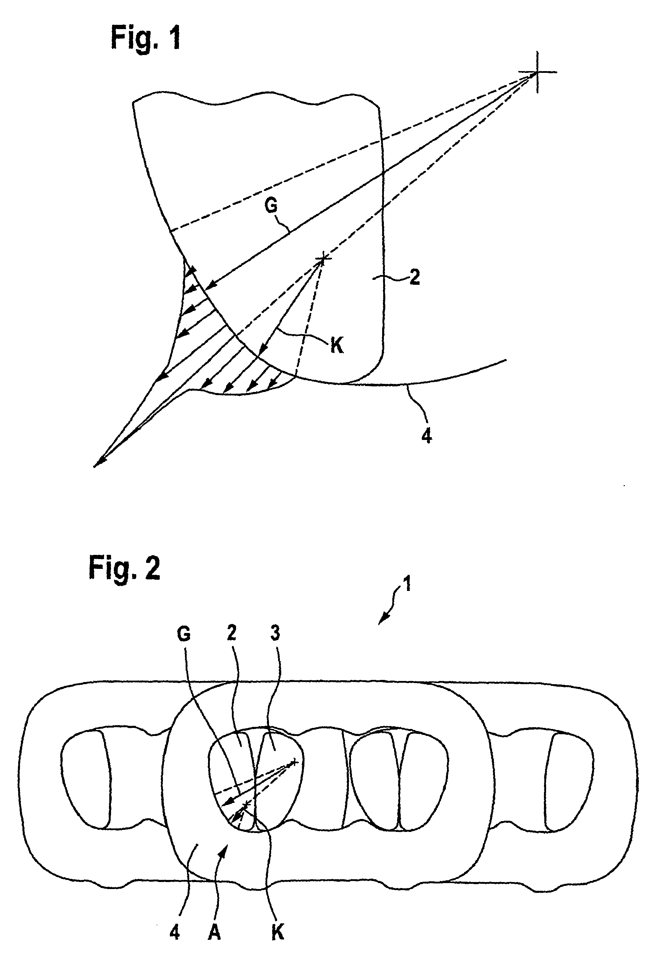

Eine entsprechende Darstellung ist in Fig. 1 der Zeichnung gezeigt. Diese zeigt, dass im Übergangsbereich zwischen dem mit K bezeichneten kleinen Krümmungsradius und dem mit G bezeichneten großen Krümmungsradius eine Druckspannungsspitze auftritt und aber die Druckspannungen im Bereich des kleinen Krümmungsradius nicht wesentlich höher ausfallen als im Bereich des großen Krümmungsradius. Die Erkenntnis lautet also dahingehend, dass nicht der kleine Krümmungsradius für das Auftreten lokal hoher Druckspannungsspitzen verantwortlich ist, sondern der Übergangsbereich von einem Krümmungsradius auf einen anderen Krümmungsradius eine Störstelle darstellt.

Es hat sich nämlich gezeigt, dass obwohl die Wälzflächen an den Druckstücken für die Verdrehung beim Knicken der Laschenkette vorgesehen sind, es zu Verdrehungen der Druckstücke an den Anlageflächen kommt, also auch bei Laschenketten mit Verdrehsicherungen im Kontaktflächenbereich der Kettenlaschen der Laschenkette und der Druckstücke Relativdrehungen stattfinden, es also zwischen Druckstück und Kettenlasche an den Anlageflächen zu einer Scherbewegung kommt, was an den Übergängen von einem Krümmungsradius zu einem anderen Krümmungsradius zu einer Fehlpaarung der Anlagenfläche führt, also die Krümmung der Kettenlasche nicht mehr mit der Krümmung des Druckstücks übereinstimmt.

Diese Scherung führt nun zu einem Übergang vom Flächentragen in der Kontaktzone zwischen dem Druckstück und der Kettenlasche zu einem über die Breite des Druckstück betrachtet Linientragen und damit zu einer erhöhten Kontaktpressung in dieser Kontaktzone, sodass es hier zu diesem in Fig. 1 der Zeichnung dargestellten Pressungsmaximum kommt. Diesem Umstand wurde bisher nicht Rechnung getragen, da nach gängigem Verständnis lediglich auf einen möglichst großen Krümmungsradius zum Herabsetzen der Belastungen im Kontaktflächenbereich zwischen Druckstücken und den Kettenlaschen abgestellt wurde.

Es liegt also ein Zielkonflikt vor derart, dass im Anlageflächenbereich einerseits den Anforderungen zulässiger Flächenpressung Rechnung getragen werden muss und andererseits auch einem Verdrehen der Druckstücke relativ zu den Kettenlaschen entgegengewirkt werden muss. Der vorliegenden Erfindung liegt nun die Aufgabe zugrunde, eine Laschenkette für einen Fahrzeugantrieb, insbesondere als CVT-Kette oder Zahnkette zu schaffen, welche diesen Zielkonflikt löst.

Die Erfindung schafft nun zur Lösung dieser Aufgabe eine Laschenkette für einen Fahrzeugantrieb, mit einer Vielzahl von über Druckstücke gelenkig miteinander verbundenen Kettenlaschen, wobei die Druckstücke quer zur Längsrichtung der Laschenkette verlaufen und an den Druckstücken und den Kettenlaschen jeweilige gekrümmt ausgebildete Anlageflächen ausgebildet sind, entlag derer die Druckstücke und Kettenlaschen zur Kraftübertragung aneinander anliegen und die jeweilige Anlagefläche einen sich quer zur Längsrichtung der Laschenkette erstreckende Breite und in einem quer zur Breite verlaufenden Schnitt in Längsrichtung der Laschenkette betrachtet eine Bogenlänge besitzt und jedes Druckstück mindestens zwei Anlageflächen aufweist und die Anlageflächen entlang der Bogenlänge mindestens drei Bereiche mit unterschiedlichen Krümmungen besitzen.

Damit schafft die Erfindung mit anderen Worten eine Laschenkette, die Anlageflächen aufweist, die entlang ihrer Kurvenlänge in einem Schnitt entlang der Längsrichtung der Laschenkette betrachtet mindestens drei Bereiche mit unterschiedlichen Krümmungen besitzen, sodass große Sprünge in den Krümmungen vermieden werden, aber dennoch Bereiche mit kleinen und großen Krümmungsradien vorgesehen sind, um einem Verdrehen der Druckstücke relativ zu den Kettenlaschen entgegen zu wirken.

Damit macht die Erfindung von der Erkenntnis Gebrauch, dass es im Gegensatz zu den bekannten Erkenntnissen nicht darauf ankommt, möglichst kleine Krümmungen mit großen Krümmungsradien im Anlageflächenbereich zu schaffen, sondern eine ausreichende Zahl von unterschiedlichen Krümmungen der Anlagefläche der Druckstücke und der Anlagefläche der Kettenlaschen vorgesehen ist, aber zu hohen Spannungsspitzen führende Krümmungssprünge vermieden werden.

Es ist dabei nach einer vorteilhaften Weiterbildung der vorliegenden Erfindung vorgesehen, dass das Verhältnis der größten Krümmung zur kleinsten Krümmung wenigstens den Faktor zwei beträgt. Mit dieser Ausbildung wird erreicht, dass eine ausreichende Verdrehsicherung der Druckstücke relativ zu den Kettenlaschen vorhanden ist und zusammen mit dem Merkmal, dass die Anlagefläche entlang ihrer Bogenlänge oder Kurvenlänge mit mindestens drei unterschiedlichen Krümmungen versehen ist, auch ausreichend kleine Krümmungssprünge vorhanden sind, sodass es an den Anlageflächen im Bereich der Krümmungssprünge nicht zu unzulässig hohen Druckspannungen kommt.

Es ist dabei nach der vorliegenden Erfindung auch vorgesehen, dass die Krümmungen in den mindestens drei Bereichen innerhalb der einzelnen Bereiche entlang der Bogenlänge jeweils gleichbleibend sein können, sich also die Kurvenlänge oder Bogenlänge durch mindestens drei Kreisbogensegmente zusammensetzen kann, betrachtet in einem Schnitt entlang der A-xiallängsrichtung der Laschenkette. Damit wird erreicht, dass die Sprünge zwischen den unterschiedlichen Krümmungen der Bogensegmente klein ausfallen und als Krümmungsradius betrachtet bei Druckstücken einer Laschenkette für einen Fahrzeugantrieb Sprünge der einzelnen Krümmungsradien beispielsweise erst von 1 mm auf 3 mm und dann auf 5 mm stattfinden können verglichen mit einem zu hohen Spannungsspitzen führenden großen Radiensprung von 1 mm auf 5 mm.

Auch ist es nach der vorliegenden Erfindung vorgesehen, dass sich die Krümmungen in den mindestens drei Bereichen innerhalb der einzelnen Bereiche entlang der Bogenlänge jeweils ändern. Es bedeutet dies mit anderen Worten, dass in den drei unterschiedlichen Bereichen nicht konstante Krümmungen vorgesehen sind, sondern sich die Krümmungen beispielsweise kontinuierlich innerhalb der einzelnen Bereiche verändern können. Damit sind Anlageflächen möglich, die in einem Axiallängsschnitt der Laschenkette betrachtet sich aus Spiralsegmenten zusammensetzen, deren Krümmung und damit auch der Krümmungsradius sich entlang der Bogenlänge kontinuierlich verändert. Neben diesen Spiralsegmenten sind auch Anlageflächenformen möglich, die sich in dem Axiallängsschnitt betrachtet aus Ellipsensegmenten zusammensetzen, deren Krümmung sich zwischen einem Minimalwert und einem Maximalwert kontinuierlich verändert. Auch sind neben diesen Formen als Segmente der Kurvenlänge Segmente aus Hyperbeln oder Parabeln möglich oder ganz allgemein Anlageflächen, die entlang der Bogenlänge Kurvensegmente besitzen deren zweite Ableitung stetig ist.

Nach einer Weiterbildung gemäß der vorliegenden Erfindung ist darüber hinaus vorgesehen, dass die Anlagefläche entlang der Bogenlänge Kurvensegmente besitzt, deren entlang der Bogenlänge kleinster Krümmungsradius weitgehend in der Mitte der Bogenlänge liegt.

Mit der Anordnung des kleinsten Krümmungsradius weitgehend in der Mitte der Bogenlänge wird erreicht, dass die größte Krümmung außerhalb des jeweiligen Endbereichs der Anlageflächen liegt, womit bei den Druckstücken erreicht wird, dass diese verglichen mit einer Anordnung, bei der der kleinste Krümmungsradius im Bereich der jeweiligen Enden der Anlageflächen liegt steifer wird und sich damit weniger durchbiegt. Bei weniger Durchbiegung der Druckstücke wird nämlich die Zugkraft auf alle nebeneinander angeordneten Kettenlaschen gleichmäßiger verteilt und die Kettenlaschen erreichen eine höhere Dauerfestigkeit und die Laschenkette insgesamt kann eine höhere Zugkraft übertragen.

Mit der erfindungsgemäßen Laschenkette wird also erreicht, dass keine ausgeprägten Kontaktspannungssprünge mehr im Übergangsbereich zwischen unterschiedlichen Krümmungsradien der Anlageflächen auftreten. Auch wird die Verdrehsicherheit der Druckstücke in den Öffnungen der Kettenlaschen verglichen mit bekannten Laschenketten erhöht.

Die Erfindung wird nunmehr anhand der Zeichnung näher erläutert. Diese zeigt in:
- Fig. 1: den Verlauf der Flächenpressung im Kontaktflächenbereich der Anlageflächen eines Druckstücks und einer Kettenlasche bei einer bekannten Konfiguration mit zwei deut- lich unterschiedlichen Krümmungsradien;
- Fig. 2: eine schematische Darstellung einer bekannten Laschenkette zur Verwendung in einem CVT-Getriebe, wobei Fig. 1 der Zeichnung eine vergrößerte Darstellung des mit A bezeichneten Bereichs darstellt;
- Fig. 3: eine vergrößerte Darstellung einer Kettenlasche und eines Druckstücks nach einer ersten Ausführungsform gemäß der vorliegenden Erfindung;
- Fig. 4: eine vergrößerte Darstellung eines Druckstücks nach einer zweiten Ausführungsform gemäß der vorliegenden Erfindung;
- Fig. 5: eine vergrößerte Darstellung eines Druckstücks nach einer dritten Ausführungsform gemäß der vorliegenden Erfindung, sowie eine Ansicht einer erfindungsgemäßen Zahnkette welche aus diesen Druckstücken aufgebaut ist;
- Fig. 6: eine vergrößerte Darstellung eines Druckstücks zur Erläuterung einzelner Bezeich- nungen; und
- Fig. 7: eine Darstellung ähnlich Fig. 1 zur Erläuterung des Flächenpressungsverlaufs in dem Kontaktflächenbereich zwischen Druckstück und Kettenlasche einer Laschenkette nach der vorliegenden Erfindung.

Wie bereits vorstehend erläutert wurde, zeigt Fig. 1 den Verlauf der Flächenpressung im Anlageflächenbereich zwischen einem Druckstück und einer Kettenlasche einer bekannten Laschenkette. Im Übergangsbereich zwischen dem mit K bezeichneten kleinen Krümmungsradius und dem mit G bezeichneten großen Krümmungsradius tritt ein ausgeprägtes Maximum der Kontaktpressung zwischen dem Druckstück und der Kettenlasche auf, wobei ursächlich hierfür der Krümmungsradiensprung zwischen dem kleinen Krümmungsradius K und dem großen Krümmungsradius G ist.

Fig. 2 der Zeichnung zeigt einen Ausschnitt einer bekannten CVT-Laschenkette 1, die sich aus einer Vielzahl von Druckstücken 2, 3 und Kettenlaschen 4 zusammensetzt. Der mit A bezeichnete Bereich in Fig. 2 ist in Fig. 1 der Zeichnung vergrößert dargestellt, sodass Fig. 1 das Druckstück 2 und die Kettenlasche 4 wiedergibt.

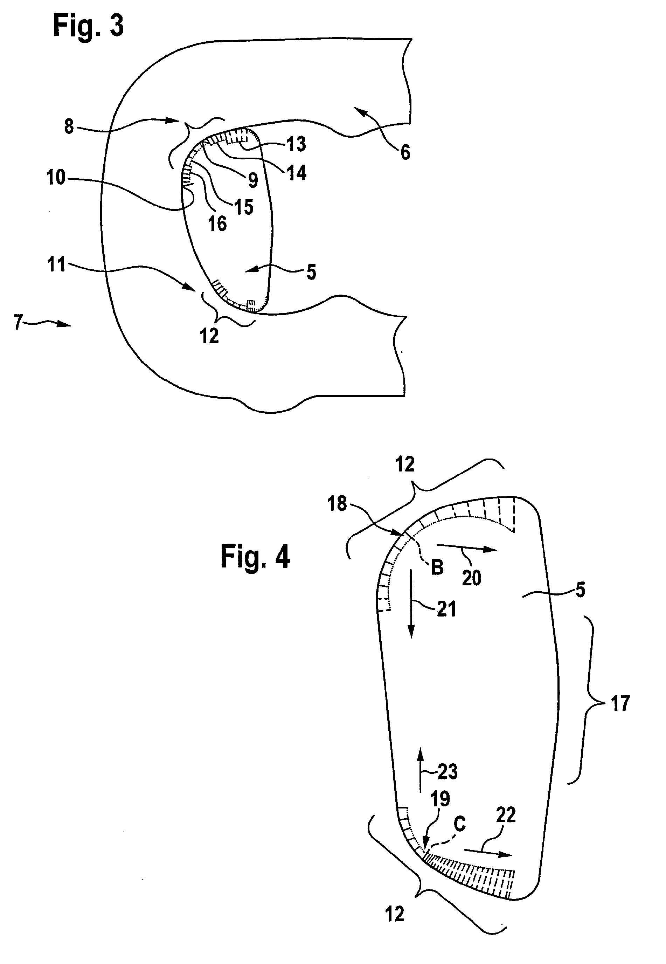

Fig. 3 der Zeichnung zeigt nun eine vergrößerte Darstellung eines Druckstücks 5 und einer Kettenlasche 6 einer Laschenkette 7 nach einer ersten Ausführungsform gemäß der vorliegenden Erfindung.

Wie es ohne weiteres ersichtlich ist, sind zwischen dem Druckstück 5 und der Kettenlasche 6 zwei Anlageflächenbereiche 8 und 11 ausgebildet, wobei der Anlageflächenbereich 8 gebildet wird von einer Anlagefläche 9 am Druckstück 5 und einer komplementär ausgebildeten Anlagefläche 10 an der Kettenlasche 6. In ähnlicher Weise setzt sich der Anlageflächenbereich 11 aus einer Anlagefläche am Druckstück 5 und einer Anlagefläche an der Kettenlasche 6 zusammen.

Das Druckstück 5 und die Kettenlasche 6 liegen an der Anlagefläche 9 bzw. der Anlagefläche 10 aneinander zur Kraftübertragung an. Da die Kettenlasche 6 in Richtung quer zur Zeichenebene der Fig. 3 eine gewisse Breite aufweist und mehrere dieser Kettenlaschen nebeneinander liegend an dem gleichen Druckstück 5 anliegen, wird die mit der Laschenkette 7 übertragene Zugkraft auf die einzelnen Anlageflächenbereiche zwischen den Druckstücken und den Kettenlaschen verteilt. In einem quer zur Breite der Laschenkette 7 verlaufenden Axiallängsschnitt weist jede Anlagefläche 9, 10 eine Bogenlänge oder Kurvenlänge auf, die in den Zeichnungen jeweils durch eine geschweifte Klammer 12 repräsentiert wird.

Fig. 3 der Zeichnung zeigt nun eine erste Ausführungsform einer Laschenkette nach der vorliegenden Erfindung, bei der die Anlagefläche 9 am Druckstück 5 und komplementär hierzu die Anlagefläche 10 an der Kettenlasche 6 mit Bereichen mit unterschiedlichen Krümmungen ausgebildet worden ist. Um nun diese Krümmungen graphisch darstellen zu können, sind in Fig. 3 der Zeichnung jeweils gestrichelt die Bereiche mit unterschiedlichen Krümmungen mit entsprechend unterschiedlichen Krümmungsradien 13, 14, 15, 16 dargestellt, wobei der jeweilige Krümmungsradius 13, 14, 15, 16 senkrecht auf die Bereiche mit unterschiedlichen Krümmungen gezeichnet dargestellt ist, um die für das menschliche Auge nur schwer visuell greifbaren unterschiedlichen Krümmungen an der Anlagefläche 9, 10 graphisch darstellen zu können.

Fig. 3 der Zeichnung macht aber ohne weiteres deutlich, dass die Krümmung im Bereich des Krümmungsradius 13 kleiner ist als im Bereich des Krümmungsradius 14, sodass der Krümmungsradius im Bereich 13 größer ist als im Bereich 14. In entsprechender Weise ist der Krümmungsradius im Bereich 15 noch kleiner als im Bereich 14 und dem gemäß ist die Krümmung im Bereich 15 größer als im Bereich 14. Damit weist die Anlagefläche 9 des Druckstücks 5 und komplementär hierzu die Anlagefläche 10 der Kettenlasche 6 im Anlageflächenbereich 8 schon drei unterschiedliche Krümmungen entlang der Bogenlänge oder Kurvenlänge der Anlagefläche 9, 10 auf. Zusätzlich zeigt Fig. 3 auch, dass an der Anlagefläche 9, 10 entlang der Bogenlänge noch ein weiterer vierter Bereich 16 mit einer sich von den Krümmungsradienbereichen 13, 14, 15 unterscheidendem Krümmungsradius 16 ausgebildet ist. In entsprechender Weise weist auch der Anlageflächenbereich 11 Bereiche mit unterschiedlichen Krümmungen auf, wobei hier nur drei Bereiche mit unterschiedlichen Krümmungen vorgesehen sind.

Fig. 4 der Zeichnung nun zeigt ein Druckstück einer Laschenkette gemäß einer zweiten Ausführungsform nach der vorliegenden Erfindung, wobei es sich bei diesem Druckstück wiederum um ein Druckstück einer Laschenkette für ein Kegelscheibenumschlingungsgetriebe handelt.

Bei diesem Druckstück 5 ist mit dem Bezugszeichen 17 die Wälzfläche bezeichnet, mit der das Druckstück 5 an dem gegenüberliegenden Druckstück (es handelt sich wieder um ein Druckstückpaar) abwälzt, wobei die grundlegende Konfiguration anhand von Fig. 2 der Zeichnung ersichtlich ist. Das Druckstück 5 weist wiederum zwei Anlageflächen 18, 19 auf, die an komplementär ausgebildeten Anlageflächen einer nicht dargestellten Kettenlasche angeordnet sind. Die obere Anlagefläche 18 weist einen mit B bezeichneten Punkt auf, an dem das Krümmungsmaximum liegt, also der wiederum senkrecht auf die Anlagefläche 18 zur Erläuterung dargestellte Krümmungsradius sein Minimum besitzt. Ab diesem Punkt B wächst der Krümmungsradius in beide Richtungen an, sodass sich die Krümmung in beide Richtungen vom Punkt B aus an der Anlagefläche 18 kontinuierlich verkleinert. Von dem Punkt B aus wächst dabei der Krümmungsradius in Richtung des Pfeils 20 entsprechend Segmenten von Ellipsen an und in Richtung des Pfeils 21 entsprechend Segmenten einer Spirale.

Fig. 4 zeigt in der unteren Anlagefläche 19 ab dem Punkt C mit dem Krümmungsmaximum ein ähnliches Verhalten, wobei der Krümmungsradius in Richtung des Pfeils 22 entsprechend einem Hyperbelsegment ansteigt und in Richtung des Pfeils 23 gemäß einem Segment aus einem Ast einer Parabel.

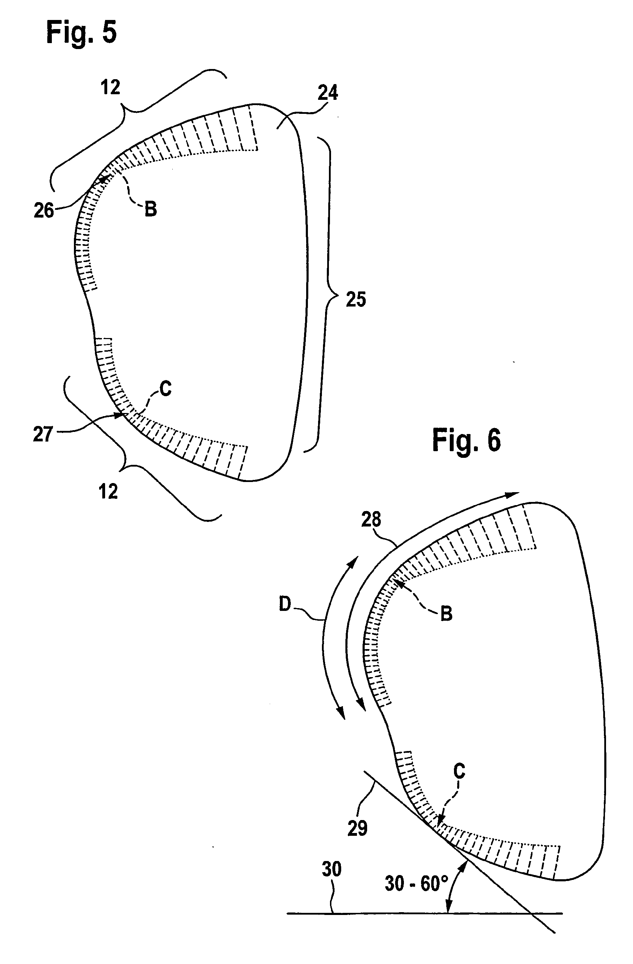

Fig. 5 der Zeichnung zeigt eine Darstellung ähnlich Fig. 4, wobei es sich bei dem in Fig. 5 der Zeichnung dargestellten Druckstück 24 um ein Druckstück einer Zahnkette handelt, die beispielsweise als Zahnkette für einen Antrieb oder als Zahnkette in Förderanlagen eingesetzt werden kann. Auch das Druckstück 24 weist eine Wälzfläche 25 auf, an der es an dem zugeordneten Druckstück des Druckstückpaars abwälzen kann. Auch das Druckstück 24 weist eine obere Anlagefläche 26 und eine untere Anlagefläche 27 auf. Die Konfiguration der Anlagefläche 26 ist dabei so gewählt, dass ab dem Punkt B der Krümmungsradius (der Krümmungsradius ist wiederum gestrichelt senkrecht auf die Kontur der Anlagefläche dargestellt) in beide Richtungen der Anlagefläche 26 entlang der Bogenlänge, die wiederum über die geschweifte Klammer 12 dargestellt ist, wächst. In entsprechender Weise wächst der Krümmungsradius an der Anlagefläche 27 von dem mit C bezeichneten Punkt mit maximaler Krümmung (entsprechend minimalem Krümmungsradius) in beide Richtungen an.

Wie es weiterhin erkannt wurde, ist einer drucksteifere Auslegung der Druckstücke möglich, wenn die größte Krümmung und damit der minimale Krümmungsradius der Anlagefläche etwa in der Mitte der Anlagefläche über die Bogenlänge bzw. Kurvenlänge der Anlagefläche betrachtet verläuft.

Fig. 6 der Zeichnung dient nunmehr der Erläuterung dieses Zusammenhangs. Mit den Buchstaben B bzw. C sind wiederum die Punkte an der oberen Anlagefläche bzw. der unteren Anlagefläche bezeichnet, die maximale Krümmung und damit minimalen Krümmungsradius innerhalb der jeweiligen Anlagefläche aufweisen. Wie es ohne weiteres anhand der Zeichnung ersichtlich ist, liegen die Punkte B bzw. C etwa in der Mitte der Bogenlänge 28, unterhalb der auch der Bereich mit den gestrichelten Krümmungsradien verläuft. Obwohl es vorstehend erwähnt wurde, dass der Punkt mit maximaler Krümmung entlang der Bogenlänge etwa in der Mitte der Anlagefläche (gemessen über die Bogenlänge 28) liegt, hat es sich gezeigt, dass ähnlich vorteilhafte Wirkungen erreicht werden, wenn der Punkt B bzw. C im Bereich D von 40 bis 60 % der Bogenlänge 28 liegt. Dieser Bereich deckt sich mit einem Winkelbereich von 30 bis 60 Grad der Tangente an die untere Anlagefläche des Druckstücks, wobei der Winkel von 30 bis 60 Grad zwischen der Tangente 29 und der Kettenlaufrichtung 30 gemessen wird. Liegt nun der Punkt mit maximaler Krümmung der jeweiligen Anlagefläche innerhalb von 40 bis 60 % der Gesamtlänge der Bogenlänge 28 bzw. innerhalb von 30 bis 60 Grad der Tangente 29 zur Kettenlaufrichtung 30, so ergeben sich steife und damit weniger durchbiegungsanfällige Druckstücke, was wiederum zu einer erhöhten mit der Laschenkette oder Zahnkette übertragbaren Zugkraft führt.

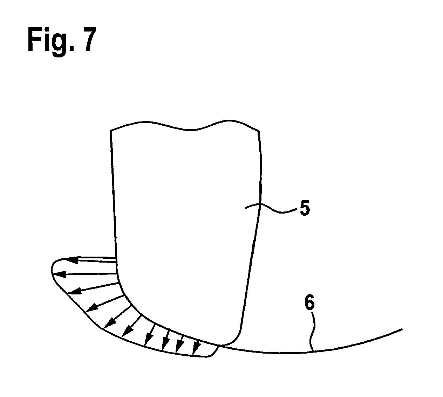

Fig. 7 der Zeichnung nun zeigt noch einen Kontaktpressungsverlauf in der in der Darstellung gewählten unteren Anlagefläche zwischen dem Druckstück 5 und der Kettenlasche 6 einer nach der Erfindung ausgebildeten Laschenkette (wobei der Begriff Laschenkette nach der Terminologie der Erfindung auch die Zahnkette umfasst). Ein Vergleich zwischen dem Kontaktpressungsverlauf einer bekannten Laschenkette nach Fig. 1 der Zeichnung und dem Kontaktpressungsverlauf nach Fig. 7 der erfindungsgemäßen Laschenkette macht sofort deutlich, dass das in Fig. 1 dargestellte ausgezeichnete Kontaktpressungsmaximum verschwunden ist. Zur Darstellung des Kontaktpressungsverlaufs in der Anlagefläche wurde in beiden Zeichnungen eine aufeinander normierte Darstellung gewählt, sodass die Länge der jeweiligen Pfeile auch die Höhe der Kontaktpressung im jeweils betrachteten Punkt der Anlagefläche repräsentiert. Damit wird es ohne weiteres anhand einer visuellen Überprüfung ersichtlich, dass das ausgeprägte Kontaktpressungsmaximum nach Fig. 1 verschwunden ist und somit die erfindungsgemäße Laschenkette die Eingangs gestellte Aufgabe erfüllt.

### Bezugszeichenliste

- 1: Laschenkette
- 2: Druckstück
- 3: Druckstück
- 4: Kettenlasche
- 5: Druckstück
- 6: Kettenlasche
- 7: Laschenkette
- 8: Anlageflächenbereich
- 9: Anlagefläche des Druckstücks
- 10: Anlagefläche der Kettenlasche
- 11: Anlageflächenbereich
- 12: geschweifte Klammer
- 13: Krümmungsradius
- 14: Krümmungsradius
- 15: Krümmungsradius
- 16: Krümmungsradius
- 17: Wälzfläche
- 18: Anlagefläche
- 19: Anlagefläche
- 20: Pfeil
- 21: Pfeil
- 22: Pfeil
- 23: Pfeil
- 24: Druckstück
- 25: Wälzfläche
- 26: obere Anlagefläche
- 27: untere Anlagefläche
- 28: Bogenlänge
- 29: Tangente
- 30: Kettenlaufrichtung
- B: Punkt mit Krümmungsmaximum
- C: Punkt mit Krümmungsmaximum
- D: Bereich von 40 bis 60 % der Bogenlänge
- K: Krümmungsradius klein
- G: Krümmungsradius groß

## Patentansprüche

1. Laschenkette für insbesondere einen Fahrzeugantrieb, mit einer Vielzahl von über Druckstücke (5) gelenkig miteinander verbundenen Kettenlaschen (6), wobei die Druckstücke (5) quer zur Längsrichtung der Laschenkette (1) verlaufen und an den Druckstücken (5) und den Kettenlaschen (6) jeweilige gekrümmt ausgebildete Anlageflächen (9, 10, 18, 19, 26, 27) ausgebildet sind, entlang derer die Druckstücke (5) und Kettenlaschen (6) zur Kraftübertragung aneinander anliegen und die jeweilige Anlagefläche (9, 10, 18, 19, 26, 27) eine sich quer zur Längsrichtung der Laschenkette (1) erstreckende Breite und in einem quer zur Breite verlaufenden Schnitt in Längsrichtung der Laschenkette (1) betrachtet eine Bogenlänge (28) besitzt, **dadurch gekennzeichnet, dass** jedes Druckstück (5) mindestens zwei Anlageflächen (9, 10, 18, 19, 26, 27) aufweist und dass die Anlageflächen (9, 10, 18, 19, 26, 27) entlang der Bogenlänge (28) mindestens drei Bereiche mit unterschiedlichen Krümmungen besitzen.

2. Laschenkette nach Anspruch 1, **dadurch gekennzeichnet, dass** das Verhältnis der größten Krümmung zur kleinsten Krümmung wenigstens den Faktor zwei beträgt.

3. Laschenkette nach Anspruch 1 oder 2, **dadurch gekennzeichnet, dass** die Krümmungen in den mindestens drei Bereichen innerhalb der einzelnen Bereiche entlang der Bogenlänge (28) jeweils gleichbleibend sind.

4. Laschenkette nach Anspruch 1 oder 2, **dadurch gekennzeichnet, dass** sich die Krümmungen in den mindestens drei Bereichen innerhalb der einzelnen Bereiche entlang der Bogenlänge (28) jeweils ändern.

5. Laschenkette nach einem der vorstehenden Ansprüche, **dadurch gekennzeichnet, dass** die Anlagefläche (9, 10, 18, 19, 26, 27) entlang der Bogenlänge (28) Kurvensegmente besitzt, deren zweite Ableitung stetig ist.

6. Laschenkette nach einem der vorstehenden Ansprüche, **dadurch gekennzeichnet, dass** die Anlagefläche (9, 10, 18, 19, 26, 27) entlang der Bogenlänge (28) Kurvensegmente besitzt, deren entlang der Bogenlänge (28) kleinster Krümmungsradius weitgehend in der Mitte der Bogenlänge (28) liegt.

## Claims

1. Plate link chain particularly for a vehicle drive, with a multiplicity of link plates (6) which are connected to one another in an articulated manner via rocker pressure pieces (5), wherein the rocker pressure pieces (5) run transversely with respect to the longitudinal direction of the plate link chain (1), and respective bearing surfaces (9, 10, 18, 19, 26, 27) of curved design are formed on the rocker pressure pieces (5) and the link plates (6), along which bearing surfaces the rocker pressure pieces (5) and link plates (6) bear against one another in order to transmit force, and the respective bearing surface (9, 10, 18, 19, 26, 27) has a width extending transversely with respect to the longitudinal direction of the plate link chain (1) and an arc length (28) in a section running transversely with respect to the width, as viewed in the longitudinal direction of the plate link chain (1), **characterized in that** each rocker pressure piece (5) has at least two bearing surfaces (9, 10, 18, 19, 26, 27), and **in that** the bearing surfaces (9, 10, 18, 19, 26, 27) have at least three regions of differing curvature along the arc length (28).

2. Plate link chain according to Claim 1, **characterized in that** the largest curvature is in a ratio to the smallest curvature of at least a factor of two.

3. Plate link chain according to Claim 1 or 2, **characterized in that** the curvatures in the at least three regions are each unvarying within the individual regions along the arc length (28).

4. Plate link chain according to Claim 1 or 2, **characterized in that** the curvatures in the at least three regions each change within the individual regions along the arc length (28).

5. Plate link chain according to one of the preceding claims, **characterized in that** the bearing surface (9, 10, 18, 19, 26, 27) has curved segments along the arc length (28), the second derivative of which curved segments is constant.

6. Plate link chain according to one of the preceding claims, **characterized in that** the bearing surface (9, 10, 18, 19, 26, 27) has curved segments along the arc length (28), the smallest radius of curvature of which curved segments along the arc length (28) lies substantially in the centre of the arc length (28).

## Revendications

1. Chaîne articulée notamment pour une transmission de véhicule, comprenant une pluralité de flasques de chaîne (6) connectés de manière articulée les uns aux autres par le biais d'éléments de pression (5), les éléments de pression (5) s'étendant transversalement à la direction longitudinale de la chaîne articulée (1) et des surfaces d'appui (9, 10, 18, 19, 26, 27) réalisées chacune sous forme courbée étant réalisées sur les éléments de pression (5) et les flasques de chaîne (6), le long desquelles les éléments de pression (5) et les flasques de chaîne (6) s'appliquent pour le transfert de force et la surface d'appui respective (9, 10, 18, 19, 26, 27) possédant une largeur s'étendant transversalement à la direction longitudinale de la chaîne articulée (1) et une longueur d'arc (28), considérée en coupe transversalement à la largeur, dans la direction longitudinale de la chaîne articulée (1), **caractérisée en ce que** chaque élément de pression (5) présente au moins deux surfaces d'appui (9, 10, 18, 19, 26, 27) et **en ce que** les surfaces d'appui (9, 10, 18, 19, 26, 27) possèdent le long de la longueur d'arc (28) au moins trois régions de courbures différentes.

2. Chaîne articulée selon la revendication 1, **caractérisée en ce que** le rapport de la plus grande courbure à la plus petite courbure est d'au moins un facteur deux.

3. Chaîne articulée selon la revendication 1 ou 2, **caractérisée en ce que** les courbures dans les au moins trois régions sont à chaque fois inchangées à l'intérieur des régions individuelles le long de la longueur d'arc (28).

4. Chaîne articulée selon la revendication 1 ou 2, **caractérisée en ce que** les courbures dans les au moins trois régions varient à chaque fois à l'intérieur des régions individuelles le long de la longueur d'arc (28).

5. Chaîne articulée selon l'une quelconque des revendications, **caractérisée en ce que** la surface d'appui (9, 10, 18, 19, 26, 27) possède le long de la longueur d'arc (28) des segments de courbe dont la deuxième dérivée est constante.

6. Chaîne articulée selon l'une quelconque des revendications précédentes, **caractérisée en ce que** la surface d'appui (9, 10, 18, 19, 26, 27) le long de la longueur d'arc (28) possède des segments de courbe dont le rayon de courbure le plus petit le long de la longueur d'arc (28) se situe essentiellement au centre de la longueur d'arc (28).
